Europäisches Patentamt

European Patent Office

Office européen des brevets

(19)

(11) Veröffentlichungsnummer: **0 446 667 A2**

(12) # EUROPÄISCHE PATENTANMELDUNG

(21) Anmeldenummer: 91102398.4

(22) Anmeldetag: 20.02.91

(51) Int. Cl.5: **G01K 7/18**

(30) Priorität: 07.03.90 DE 4007129

(43) Veröffentlichungstag der Anmeldung:
**18.09.91 Patentblatt  91/38**

(84) Benannte Vertragsstaaten:
**AT BE CH DE DK ES FR GB GR IT LI LU NL SE**

(71) Anmelder: **FRAUNHOFER-GESELLSCHAFT
ZUR FÖRDERUNG DER ANGEWANDTEN
FORSCHUNG E.V.
Leonrodstrasse 54
W-8000 München 19(DE)**

(72) Erfinder: **Dumbs, Alfred, Dr.
Fillibachstrasse 17**
**W-7800 Freiburg(DE)**
Erfinder: **Grabowski, Reinhard, Dr.
Eulenweg 12
W-7800 Freiburg(DE)**
Erfinder: **Lacher, Manfred
Scheffelstrasse 23
W-7800 Freiburg(DE)**
Erfinder: **Rinkenauer, Gerhard
Kreuzstrasse 9
W-7800 Freiburg(DE)**

(74) Vertreter: **Rackette, Karl, Dipl.-Phys. Dr.-Ing
Kaiser-Joseph-Strasse 179 Postfach 1310
W-7800 Freiburg(DE)**

(54) **Temperatursensor.**

(57) Ein Temperatursensor (40) verfügt über auf einem elektrisch isolierenden und eine geringe Strahlungsabsorption aufweisenden Substrat (32) dünnschichttechnisch in Mäanderform aufgebrachte elektrisch leitende Leiterbahnen (21) in einem Meßfenster (20) auf, deren Endpunkte (16,17) an eine Meßwerkschaltung angeschlossen sind. Die Gesamtoberfläche der Leiterbahnen (21) in der Projektion auf die Ebene des Substrates (32) steht zu der Oberfläche des Meßfensters (20) in einem Bedeckungsverhältnis von kleiner als 20 Prozent, so daß die Leiterbahnen (21) aufgenommene Strahlung ohne Interferenz mit anderen Leiterbahnen (219 abgeben können. Entweder steht die Summe der Oberflächen des Meßfensters (20) und des das Meßfenster (20) umgebenden Substrates (32) zu der das Substrat im Meßfensterbereich (22) umrandenden Randoberfläche (23) in einem Flächenverhältnis von größer als 4 zu 1 oder das Substrat (32) ist unter den Leiterbahnen (21) im Meßfenster (20) im wesentlichen weggeätzt (36). Dann ist die Querschnittsfläche der auf dem Substrat (32) aufliegenden Umkehrschleifen (34) der Leiterbahnen (21) größer als die Querschnittsfläche der Leiterbahnen (21), so daß ein Widerstandseinfluß infolge der Temperatur des Substrats (32) auf die Leiterbahnen (21) wirkungsvoll verhindert wird. Mit diesem Temperatursensor (40) sind Temperaturmessungen im Bereich zwischen -70° und +50° Celsius bei Normaldruck bis zu einem Druck von wenigen Millibar und direkter Sonneneinstrahlung mit einem Strahlungsfehler von unter 0,2° Celsius möglich.

Fig.4

EP 0 446 667 A2

Die Erfindung betrifft einen Temperatursensor mit einer auf einem elektrisch isolierenden und eine geringe Strahlungsabsorption aufweisenden Substrat dünnschichttechnisch in Mäanderform aufgebrachten elektrisch leitenden Schicht, deren beide Endpunkte an eine Meßwerkschaltung anschließbar sind.

Ein derartiger Temperatursensor ist zum Beispiel aus dem Typenblatt 90.255 der Firma M.K.Juchheim GmbH&Co., 6400 Fulda, bekannt. Bei diesem Sensor ist eine Platinschicht dünnschichttechnisch auf ein Keramiksubstrat aufgebracht. Die Platinschicht füllt bis auf isolierende Ritzen die Oberfläche des Keramiksubstrates voll aus und bildet einen Mäander. An dem einen Ende des Keramiksubstrates ist der Temperatursensor an zwei Anschlußdrähte angeschlossen. Über den Anschlußpunkten auf dem Keramiksubstrat ist eine Zugentlastung aus Keramik aufgebracht.

Durch die Verwendung von Platin als Widerstandsschicht sind Temperaturen bis 750° Celsius meßbar. Platin ist genügend rein und damit reproduzierbar herstellbar und es besteht ein Zusammenhang zwischen dem Widerstand der Schicht und seiner Temperatur durch einen Potenzreihenansatz.

Bei der Erfassung der Temperatur beim Ballonaufstieg einer Wettersonde muß die Temperatur der Luft vom Erdboden ab bis in einen Höhenbereich von ungefähr 30 km mit einer Genauigkeit von ± 0,2° Celsius bestimmt werden, wobei der Temperaturmeßbereich zwischen -70° und +50° Celsius liegt. Als zusätzliches Erschwernis der Messung fällt der Druck von Normaldruck in Erdbodennähe bis auf wenige Millibar in der Höhe ab und eine direkte Sonneneinstrahlung auf die Wettersonde ist zumeist auch unvermeidbar.

Bei solchen Messungen müssen dann Strahlungskorrekturen in der Größenordnung von mehreren Grad durchgeführt werden, die die Genauigkeit der Temperaturerfassung begrenzen.

Ein weiterer Meßfehler tritt dadurch auf, daß sich die Widerstandsschicht durch Verschleppung von Wärme, zum Beispiel über die Anschlußdrähte, zusätzlich erwärmt.

Die oben beschriebenen Strahlungsfehler werden aufgrund von empirischem Wissen aus vergleichenden Radiosondenaufstiegen korrigiert. Bei der deutschen Wettersonde M 60 zum Beispiel wird im oberen Höhenbereich je nach Stand der Sonne bezüglich der Sonde eine rechnerische Strahlungskorrektur der erfaßten Temperatur von bis zu 30° Celsius vorgenommen. Damit ist eine Meßgenauigkeit von ± 0,2° Celsius unmöglich.

Ein weiterer Temperatursensor ist aus der DE 37 36 005 A1 bekannt, mit dem die bei Kochplatten auftretenden Temperaturen erfaßbar sind, wobei das erhaltene Sensorsignal zu der Temperaturregelung der Kochplatten ausgenützt wird. Mit einem solchen, auf einem für Kochplatten üblichen Substrat, einer Glaskeramik, aufgebrachten Temperatursensor ist es möglich, über die Messung des Widerstandes einer Leiterbahn die Temperatur des Substrates selbst zu messen. Es ist mit einem solchen Sensor jedoch nicht möglich, die Temperatur der umgebenden Raumluft genau zu bestimmen, da dann Strahlungskorrekturen von mehreren bis einigen dutzend Grad durchgeführt werden müßten, die die Genauigkeit der Temperaturerfassung stark begrenzen würden.

Ausgehend von diesem Stand der Technik liegt der Erfindung die Aufgabe zugrunde, einen Temperatursensor der eingangs genannten Art zu schaffen, der es gestattet, auf Zehntel-Grad-Celsius genaue Umgebungs-Raum-Temperaturmeßwerte im Temperaturbereich von -80° bis +50° Celsius bei einem vorherrschenden Druck zwischen Normaldruck und wenigen Millibar ohne Anwendung einer empirischen Strahlungskorrektur zu erhalten.

Diese Aufgabe wird erfindungsgemäß dadurch gelöst, daß das Substrat im optisch sichtbaren Wellenlängenbereich transparent ist, daß die elektrisch leitende Schicht eine Vielzahl von mäanderförmigen Leiterbahnen in einem Meßfenster umfaßt, wobei die Gesamtoberfläche der Leiterbahnen in der Projektion auf die Ebene des Substrates zu der Oberfläche des Meßfensters in einem Bedeckungsverhältnis von kleiner als 20 Prozent steht, und daß die Summe der Oberflächen des Meßfensters und des das Meßfenster umgebenden Meßfensterrahmens zu der das Substrat im Meßfensterbereich umrandenden Randoberfläche in einem Flächenverhältnis von größer als 4 zu 1 steht.

Dadurch, daß das Substrat im optisch sichtbaren Wellenlängenbereich transparent ist und die Oberfläche der Hauptebene des Substrates mindestens um einen Faktor 3 größer ist als die das Substrat berandenden Kantenflächen, ist ein günstiges Strahlungsaufnahme- und abgabeverhältnis für den Temperatursensor geschaffen. Die Verwendung von zum Beispiel weniger als 30 Mikrometer breiten elektrisch leitenden Schichten in Mäandern schafft eine lange Widerstandsbahn, wobei jedoch die Gesamtoberfläche des Meßfensters im Substrat höchstens zu einem Fünftel abgedeckt ist. Dadurch können die mäanderförmigen Leiterbahnen leicht Wärme an die Umgebung abgeben, ohne dabei mit dem Strahlungsabgabeverhalten von benachbarten Leiterbahnen zu interferieren.

Gemäß einem Nebenanspruch wird die oben genannte Aufgabe auch dadurch gelöst, daß die Schicht eine Vielzahl von mäanderförmigen Leiterbahnen in einem Meßfenster umfaßt, wobei die Gesamtoberfläche der Leiterbahnen in der Projektion auf die Ebene des Substrates zu der Oberfläche des Meßfensters in einem Bedeckungsverhältnis von kleiner 20 Prozent steht, daß das Substrat unter den Leiterbahnen im Meßfenster im wesentlichen weggeätzt ist.

Dadurch, daß das Substrat unterhalb der Leiterbahnen im Meßfenster im wesentlichen weggeätzt ist, hat eine Erwärmung des Substrates keinen Einfluß mehr auf die Temperatur der Leiterbahnen. Dies gilt insbesondere, wenn die auf dem Substrat aufliegenden Umkehrschleifen der Leiterbahnen eine größerer Querschnittsfläche als die Leiterbahnen selbst aufweisen.

Bei einem vorteilhaften Flächenverhältnis von größer als 10 : 1 verkleinert sich der durch eine Strahlungskorrektur zu kompensierende Temperaturfehler auf unter ein Viertel Grad Celsius.

Vorzugsweise weisen die Umkehrschleifen eine um 5 bis 15 mal größere Querschnittsfläche als die Querschnittsfläche der Leiterbahnen auf, wobei diese Erhöhung der Querschnittsfläche durch eine Verdickung oder eine Verbreiterung der Leiterbahnen erzeugt werden kann. Die Umkehrschleifen tragen dann zur temperaturempfindichen Widerstandsschicht nur noch in sehr kleinem Umfang bei, so daß ein von dort stammender Temperaturfehler unterdrückt ist.

In einer anderen Ausgestaltung der Erfindung sind die Umkehrschleifen aus einer in der Temperaturmessung neutralen Schicht z.B. Konstantan oder Ni/Cr-80/20 ausgebildet.

In einer vorteilhaften Ausgestaltung der Erfindung besteht das Substrat aus Silizium, das leicht strukturierbar ist. Zusätzlich kann der Rahmenbereich um das Meßfenster beidseitig verspiegelt sein, wobei die Leiterbahnen und die Umkehrschleifen mit einer Isolierschicht, zum Beispiel aus Siliziumoxid abgedeckt sind.

In einer anderen vorteilhaften Ausgestaltung der Erfindung ist das Substrat im optisch sichtbaren Wellenlängenbereich transparent und besteht aus strukturierbarem Glas, das in leichter Weise ätzbar ist.

Silizium und ätzbares Glas sind beide im infraroten Spektralbereich hervorragende Emitter, die aufgenommene Wärme leicht wieder abgeben können.

Vorteilhafterweise weisen Substrate eine Dicke zwischen 300 und 500 Mikrometern auf, die dann genügend stabil sind und nur über kleine in das Flächenverhältnis eingehende Randflächen verfügen.

Vorteilhafte Leiterbahnen weisen eine Dicke zwischen 0,5 und 1 Mikrometer und eine Breite von weniger als 30 Mikrometern auf, womit sich eine ungefähre Querschnittsfläche im Bereich von 10 $\mu m^2$ ergibt.

Die Leiterbahnen bestehen vorzugsweise aus einem Werkstoff hoher Reflektivität wie einer Schichtenfolge aus Chrom-Nickel-Chrom oder aus Platin oder aus einem Werkstoff hoher Transparenz im optischen Wellenlängenbereich wie z.B. Indiumzinnoxid (ITO).

Bei einem vorteilhaften Ausführungsbeispiel der Erfindung sind dünnschichttechnisch auf das Substrat aufgebrachte erste Spannungsanschlußbahnen vorgesehen, die von einem in großer Entfernung von dem Meßfenster angeordneten Anschlußpunkt zu dem zugehörigen Endpunkt im Meßfenster verlaufen. Dadurch können zur elektronischen Auswerteschaltung verlaufende metallische Drähte in großer Entfernung von dem Meßfenster angeordnet werden, so daß keine Wärmeverschleppung über sich erwärmende Metallteile der Sondenausrüstung auf die von dem Temperatursensor ermittelte Temperatur Einfluß haben kann.

Weitere vorteilhafte Ausgestaltungen der Erfindung sind in den Unteransprüchen gekennzeichnet.

Nachfolgend wird die Erfindung anhand der in den Zeichnungen dargestellten Ausführungsbeispiele näher erläutert. Es zeigen:

Fig. 1 eine Draufsicht auf einen Temperatursensor gemäß einem ersten Ausführungsbeispiel,

Fig. 2 eine Draufsicht auf einen Temperatursensor gemäß einem zweiten Ausführungsbeispiel mit einem weggeätzten Meßfenster,

Fig. 3 einen Temperatursensor gemäß Fig. 2 mit einem Zweipunktabgriff,

Fig. 4 eine Draufsicht auf einen Temperatursensor gemäß einem dritten Ausführungsbeispiel mit einer seitlichen Öffnung,

Fig. 5 eine Querschnittsansicht durch eine Leiterbahn eines Temperatursensors gemäß den Fig. 1 bis 4 und

Fig. 6 eine Draufsicht auf einen Doppeltemperatursensor auf einem einzigen Substrat.

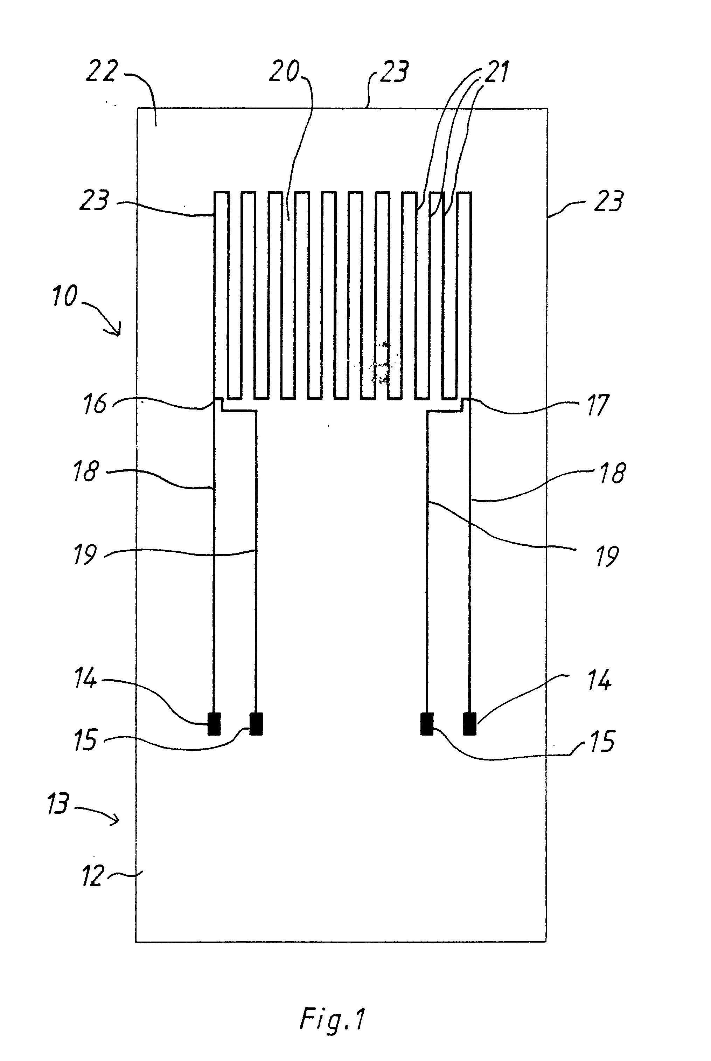

Die Fig. 1 zeigt einen Temperatursensor 10 gemäß einem ersten Ausführungsbeispiel der Erfindung. Der Temperatursensor 10 ist auf einem Substrat 12 aufgebracht, das elektrisch isolierend und eine geringe Strahlungsabsorption aufweist. Das Substrat 12 ist im optisch sichtbaren Wellenlängenbereich hochtransparent und kann zum Beispiel aus Glas oder Quarz sein.

Eine geeignete Größe für das Substrat 12 ist zum Beispiel 10 x 20 Millimeter mit einer Dicke von 500 Mikrometer oder weniger. Das dünne Substrat 12 wird in einem Haltebereich 13 gehalten, in dessen unmittelbarer Nähe sich Kontaktpunkte 14 und 15 befinden. An die Kontaktpunkte 14, 15 ist eine die Messung auswertende Meßwerkschaltung über in der Zeichnung nicht dargestellte metallische Drähte anschließbar. Zwischen den Kontaktpunkten 14, 15 und den Anschlußpunkten 16, 17 des Temperatursensors 10 sind Anschlußpfade 18, 19 dünnschichttechnisch auf das Substrat 12 aufgebracht. Die Anschlußbahnen 18 und 19 vereinigen sich in den Anschlußpunkten 16, 17.

Zwischen den Anschlußpunkten 16, 17 sind in einem Meßfenster 20 eine Vielzahl von mäanderförmig verlegten Leiterbahnen 21 vorgesehen. Die Breite der dünnschichttechnisch aus das Substrat 12 aufgebrachten Leiterbahnen 21 ist kleiner als 100 Mikrometer und liegt vorteilhafterweise unter 30 Mikrometer, wobei ihre Dicke zwischen 50 und 1000 Nanometer beträgt.

Die Leiterbahnen 21 bestehen aus einem elektrisch leitenden hochreflektierenden Werkstoff. Dies kann zum Beispiel eine Schichtenfolge Chrom-Nickel-Chrom oder Platin sein.

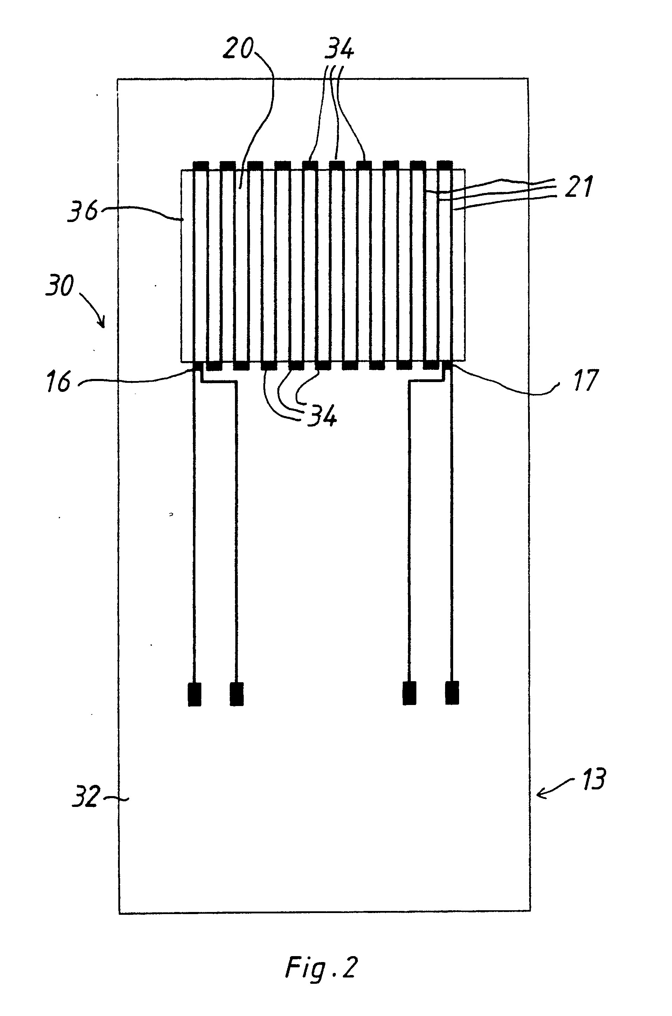

Der Abstand der einzelnen insgesamt zwanzig Leiterbahnen 21 voneinander ist um mindestens einen Faktor 5 größer als die Breite der Leiterbahnen selbst. In dem in der Fig. 2 gezeichneten Meßfenster von 5 x 6 Millimeter mit unmaßstäblich dick gezeichneten Leiterbahnen 21 von 30 Mikrometer Breite - und einer Länge von 5 Millimetern - liegt das Bedeckungsverhältnis bei 10 Prozent. Dieser geringe Flächenanteil der Bedeckung ist vorteilhaft, weil eine gute Transparenz leichter zu realisieren ist als eine gute Reflektion der Leiterbahnen.

Über die Kontaktpunkte 14 und die Anschlußpfade 18 wird über die Anschlußpunkte 16 und 17 den Leiterbahnen 21 im Meßfenster 20 ein Strom aufgeprägt, wobei über die Kontaktpunkte 15 und die Anschlußpfade 19 der Spannungsabfall zwischen den Anschlußpunkten 16 und 17 erfaßt wird. Damit ist der Widerstand der Leiterbahnen 21 im Meßfenster 20 erfaßbar und über einen Potenzreihenansatz die Temperatur der Leiterbahnen 21 errechenbar.

Das Meßfenster 20 ist von einem Meßfensterrahmen 22 umgeben, der das Meßfenster 20 um ungefähr mindestens 2 Millimeter an allen Seiten überragt. Der Abstand des Meßfensters 20 zu dem 5 Millimeter breiten Haltebereich, über den Wärme auf das schlecht wärmeleitende Substrat 12 überleitet wird, ist möglichst groß und beträgt z.B. bei dem in der Zeichnung dargestellten Substrat 12 einer Dicke von 500 Mikrometern 8 Millimeter. Es ergibt sich eine Summenoberfläche der Oberflächen des Meßfensters 20 und des Meßfensterrahmens 22 von 90 mm². Diese Fläche ist um einen Faktor 6,5 größer als die das Substrat berandeten Flächen 23 mit 14 mm². Dieses Flächenverhältnis ist vorzugsweise größer als 10 : 1.

Die Fig. 2 zeigt einen Temperatursensor 30 gemäß einem zweiten Ausführungsbeispiel der Erfindung. Das Substrat 32, das dieselben geometrischen Ausmaße wie das Substrat 12 aufweist, besteht aus einem elektrisch isolierenden und eine geringe Strahlungsabsorption aufweisenden Werkstoff. Dieser Werkstoff kann zum Beispiel Silizium oder strukturierbares Glas sein, wobei letzteres unter dem Warenzeichen "FOTURAN" von der Firma SCHOTT, Mainz vertrieben wird. Strukturierbar heißt in diesem Fall, daß mittels punktueller UV-Bestrahlung (Photolithographie) starke Löslichkeitsunterschiede im Glas hervorgerufen und somit Lochmuster im Substrat 32 erzeugt werden können.

Auf das Substrat 32 sind mit Dünnschichttechnik analog zur Fig. 1 Kontaktpunkte 14 und 15, Anschlußpfade 18 und 19 sowie Anschlußpunkte 16 und 17 aufgebracht worden.

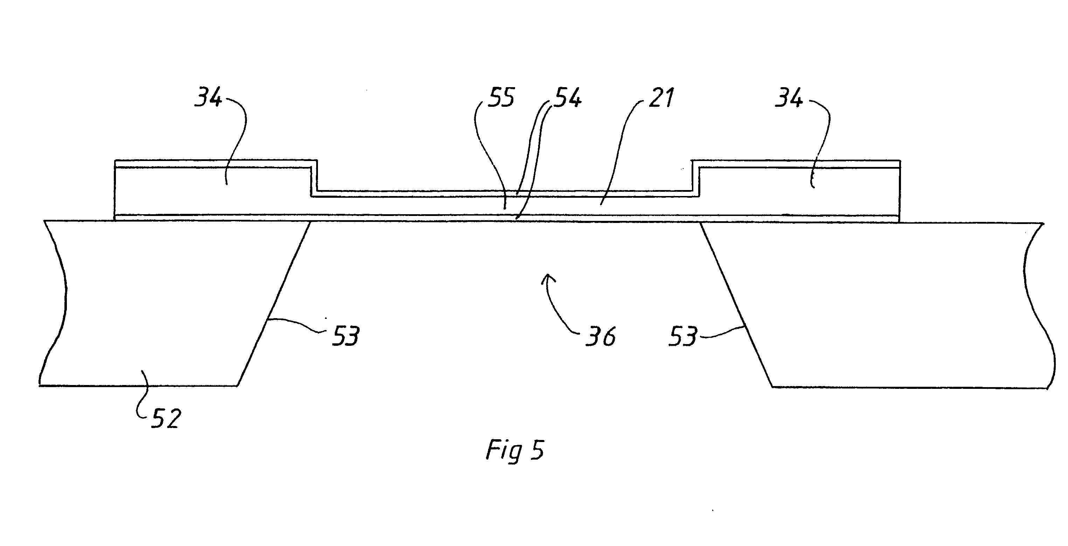

Zwischen den Anschlußpunkten 16 und 17 sind in analoger Weise zum ersten Ausführungsbeispiel gemäß Fig. 1 zehn mäanderförmige Leiterbahnen 21 aus einem elektrisch leitenden hochreflektierenden Werkstoff aufgebracht worden. An den Umkehrpunkten der Leiterbahnen 21 sind Umkehrschleifen 34 vorgesehen, deren Querschnittsfläche um einen Faktor 5 bis 15 größer als die Querschnittsfläche der Leiterbahnen 21 selbst ist. Wenn die Leiterbahnen 21, wie oben angegeben, eine Breite von zum Beispiel 30 Mikrometer und eine Dicke von 0,5 Mikrometer und somit eine Querschnittsfläche von 15 $\mu m^2$ aufweisen, liegt die Querschnittsfläche jeder der Umkehrschleifen 34 zwischen 75 und 225 $\mu m^2$. Zum einen kann, wie in der Fig. 2 dargestellt, die Leiterbahn bei gleicher Dicke breiter ausgeführt sein. Es ist jedoch auch möglich und in der Fig. 5 dargestellt, daß die Umkehrschleifen 34 durch ein galvanisches Verdikken der Leiterbahnen 21 zu erzeugt werden. Es können auch beide Herstellungsverfahren gleichzeitig angewendet werden.

In einer anderen Ausgestaltung der Erfindung sind die Leiterbahnen 21 als unverbundene, parallele Strecken ausgebildet und die Umkehrschleifen 34 verbinden diese auf dem Substrat 32 durch dünnschichttechnisch aufgetragene, rechtwinklig zu den Leiterbahnen 21 verlaufende Konstantan-Strekken. Neben Konstantan können andere in der Temperaturmessung neutrale Werkstoffe wie Ni/cr-80/20 verwendet werden.

In einem dem Aufbringen der vorgenannten Leiterbahnen 21 und Umkehrschleifen 34 nachfolgenden Verfahrensschritt wird in dem Meßfenster 20 eine Öffnung 36 geätzt, deren Größe derart bemessen ist, daß die Leiterbahnen 21 zwischen den Umkehrschleifen 34 frei tragend sind, wobei die Umkehrschleifen 34 einen Befestigungsgrund auf dem Substrat 32 bilden. In der rechtwinklig zu den Leiterbahnen 21 verlaufenden Richtung ist die Öffnung um z.B. 200 Mikrometer breiter als der Abstand der beiden äußersten Leiterbahnen 21 voneinander. Die verdickten Umkehrschleifen 34 verhindern auch einen Widerstandseinfluß infolge der Temperatur des Substrates 32 auf die Leiterbahnen 21. Die kleine Dimension des Meßfensters und des temperaturfühlenden Teils des Sensors führt zu kleinsten Strahlungsfehlern und zu kleinen Zeitkonstanten des Temperatursensors.

Das Substrat 32 ist zum Beispiel aus Silizium hergestellt. Dann ist vorteilhafterweise das Substrat 32 im Meßfensterrahmen 22 beidseitig verspiegelt, wobei die Leiterbahnen 21 und die Umkehrschleifen 34 mit einer in der Zeichnung nicht dargestellten Isolierschicht, zum Beispiel aus Siliziumdioxid, abgedeckt sind.

In einer anderen Ausgestaltung der Erfindung besteht das Substrat 32 aus einem im optischen Wellenlängenbereich transparenten Werkstoff. Dieser Werkstoff kann Glas oder strukturierbares Glas sein. In diesem Falle ist eine Verspiegelung des Meßfensterrahmens 22 nicht notwendig.

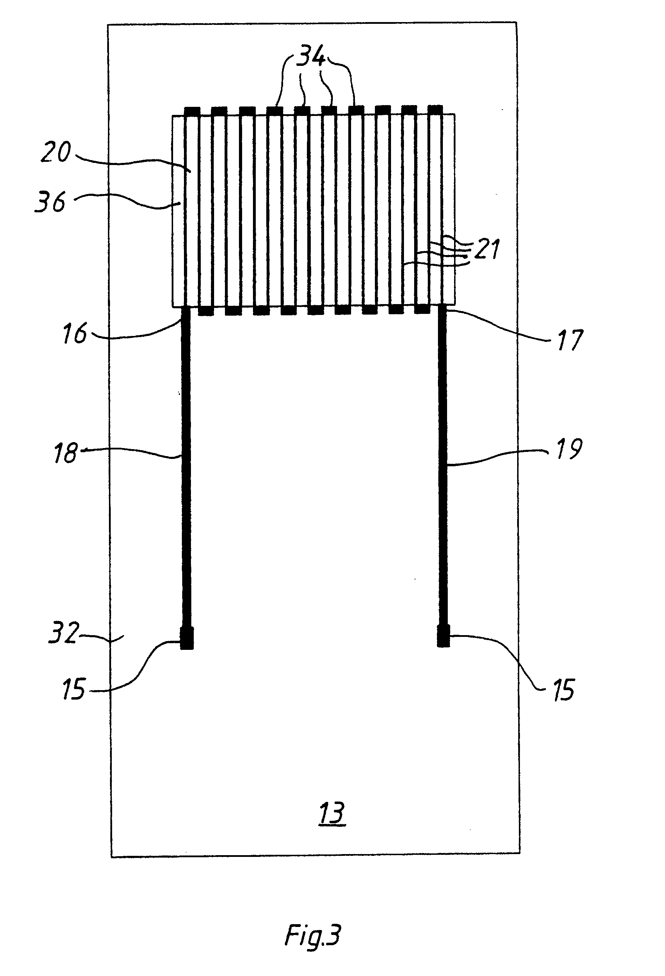

Die Fig. 3 zeigt einen Temperatursensor 30 gemäß Fig. 2 mit einem Zweipunktanschluß. Hierbei wird aus dem vom Meßfenster 20 entfernten Haltebereich 13 nur jeweils ein Anschlußpfad 19 von einem Kontaktpunkt 15 zu den Anschlußpunkten 16 und 17 herangeführt. Die Anschlußpfade 19 sind stark verdickt mit einer Breite von 0,3 Millimeter ausgestaltet. Auch diese Breite ist jedoch genügend schmal, um eine Verschleppung von Wärme durch Wärmeleitung über die Anschlußpfade 19 zu den Leiterbahnen des Meßfensters 20 hin zu vermeiden.

In einer weiteren Ausgestaltung der Erfindung bestehen die Leiterbahnen 21 aus einem Werkstoff hoher Transparenz im optischen Wellenlängenbereich wie Indiumzinnoxid oder Antimonzinnoxid. Die Leiterbahnen können auch in einer sehr dünnen, mit einer Passivierung versehenen Goldschicht realisiert sein. Dadurch kann wie bei den oben genannten hochverspiegelten Leiterbahnen die Strahlungsabsorption der Leiterbahnen selbst niedrig gehalten werden.

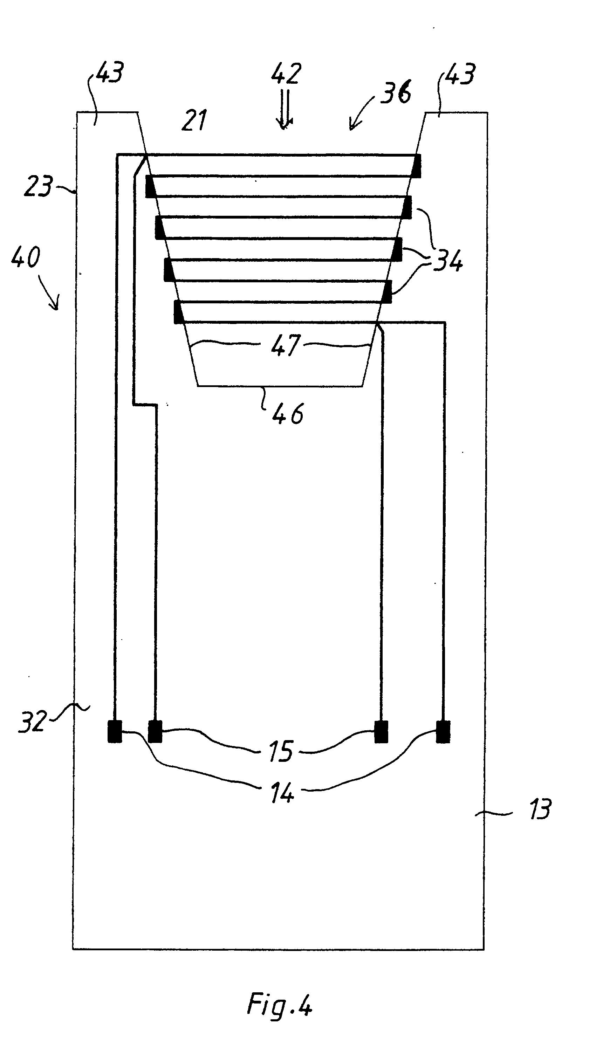

Die Fig. 4 zeigt in einer Draufsicht einen Temperatursensor 40 gemäß einem dritten Ausführungsbeispiel der Erfindung.

Hierbei ist die weggeätzte Öffnung 36 im Meßfenster 20 um eine seitliche Mündung 42 erweitert. Dadurch bildet das Substrat 32 eine U-förmige Gabel, zwischen deren Arme 43 und 44 sich die Leiterbahnen 21 erstrecken.

Vorteilhafterweise wird beim Einsatz des Temperatursensors 40 bei einer Wettermeßsonde die Mündung 42 in Windrichtung ausgerichtet, so daß die Luft, deren Temperatur zu erfassen ist, in der Richtung des Pfeils 42 frei an den Leiterbahnen 21 vorbeistreichen kann, ohne von in der Nähe des Temperatursensors angeordneten und in der Zeichnung nicht dargestellten Gegenständen vorerwärmt zu werden. Die untere Kante 46 der Öffnung 36 ist in einem Abstand von vorzugsweise nicht unter 500 Mikrometern von der äußersten unteren Leiterbahn 21 angeordnet. Vorteilhafterweise ist die untere Kante 46 der Öffnung 36 als Keil in der Ebene des Substrates 32 ausgebildet, so daß die gegen ihn stoßende Luftströmung ohne große Verwirbelung das Meßfenster 20 verläßt.

Die zwischen den Armen 43 und 44 gespannten Mäander 21 weisen in verschiedenen Bereichen des Temperatursensors 40 durch die sich zur Kante 46 verjüngenden Seitenkanten 47 eine unterschiedliche Länge auf und verkürzen sich insbesondere zu der Kante 46 hin. In einer in der Zeichnung nicht dargestellten Ausgestaltung der Erfindung verlaufen die Seitenkanten 47 der Öffnung 36 parallel zueinander, so daß die zwischen den Armen 43 und 44 gespannten Mäander 21 in allen Bereichen des Meßfensters 20 die gleiche Länge aufweisen.

Die Fig. 5 zeigt einen Querschnitt durch einen Temperatursensor 10, 30 oder 40 mit einer Leiterbahn 21 im Schnitt. Die Leiterbahn 21 besteht aus einer dreilagigen Metallschicht. Auf einer dünnen Chromschicht 54 ist eine Nickelschicht 55 aufgebracht, die wiederum von einer weiteren hochreflektierenden Chrom-Schicht 54 abgedeckt ist. Die Chromschichten 54 weisen z.B. eine Dicke von 20 Nanometern auf, während die Nickelschicht 55 über eine Dicke zwischen 400 und 1000 Nanometer verfügt. Im Bereich des Substrates 52 sind die Umkehrschleifen 34 angeordnet, die in dem bezeichneten Ausführungsbeispiel eine galvanisch aufgetragene Verdikkung der Leiterbahnen 21 sind. Die Dicke der Umkehrschleifen 34 liegt zum Beispiel im Bereich zwischen 1 und 4 Mikrometern. Die Seitenkanten 53 des weggeätzten Meßfensters 20 verlaufen trapezoidal zueinander, wobei sich die Öffnung 36 zu den Leiterbahnen 21 hin verjüngt. In anderen Ausführungsformen des Temperatursensors können diese Seitenkanten 53 auch parallel zueinander rechtwinklig zu der Ebene der Leiterbahnen 21 sein.

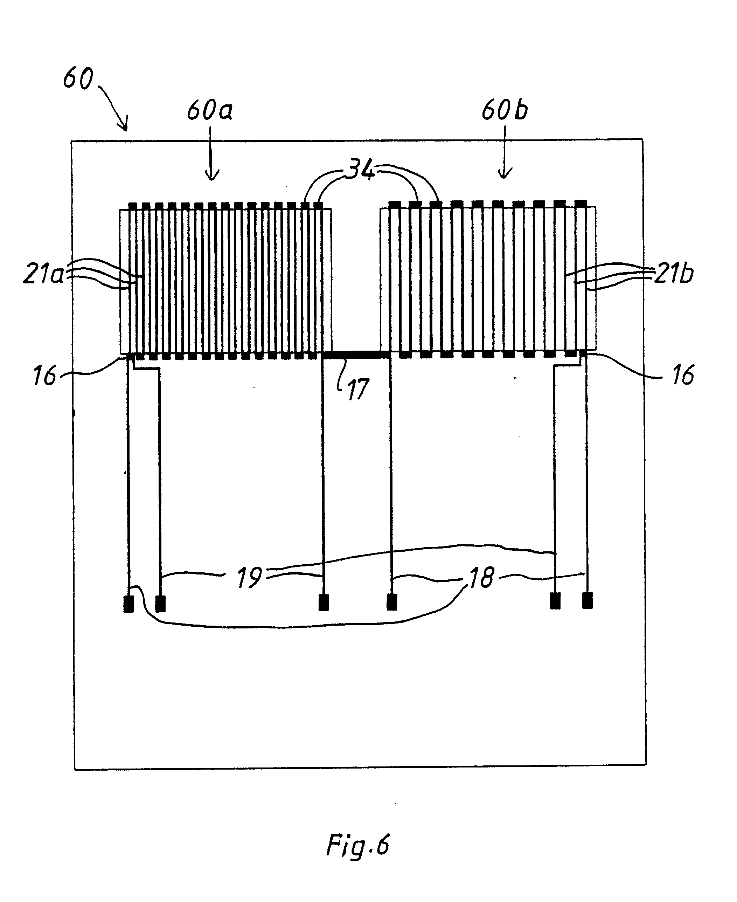

Die Fig. 6 zeigt einen Doppeltemperatursensor 60, auf einem Substrat 52. Zwei in ihrem Werkstoff gleiche Leiterbahnen 21a und 21b sind an ihren Anschlußpunkten 16 bzw. 17 in bekannter Weise an die oben erwähnte Meßwerkschaltung mit Vierpunkt-Abgriff angeschlossen. Dabei können die Sensoren 60a und 60b über einen gemeinsamen Mittelabgriff 17 in einem Anschlußpunkt verbunden sein. In der Fig. 6 besteht der Unterschied zwischen den beiden Einzeltemperatursensoren 60a und 60b darin, daß das Bedeckungsverhältnis des Sensors 60a größer als das Bedeckungsverhältnis des Sensors 60b ist. In der Fig. 6 ist das Bedeckungsverhältnis um die Hälfte größer. Dadurch ergibt sich eine andere Wärmeabsorption für beide Sensoren, so daß aufgrund der von den Sensoren 60a und 60b gemessenen Temperaturen $T_{60a}$ und

$T_{60b}$ sowie der Temperaturdifferenz zwischen den beiden Sensoren 60a und 60b eine im Meßzeitpunkt aufgenommene Strahlungskalibrierung der Temperatursensoren 60 durchgeführt werden kann und somit die Temperatur auf Zehntel Grad und besser korrigierbar ist.

Der Unterschied zwischen den Sensoren 60a und 60b kann außer im Bedeckungsverhältnis und damit der Anzahl ihrer Leiterbahnen 21a und 21b im gleichgroßen Meßfenster 20 auch darin liegen, daß sich der Werkstoff der Leiterbahn 21a von dem der Leiterbahn 21b unterscheidet. Zum Beispiel kann die Leiterbahn 21a aus Platin und die andere Leiterbahn 21b aus einer Chrom-Nickel-Chrom-Schicht bestehen. Weiterhin können sich die Querschnittsflächen der Leiterbahnen 21a und 21b durch eine unterschiedliche Dicke der Leiterbahnen 21a und 21b voneinander unterscheiden. Mit einer Änderung der Querschnittsfläche durch einen Breitenunterschied der Leiterbahnen 21 ist gleichzeitig eine Veränderung der Bedeckung des Meßfensters 20 gegeben.

Der Unterschied zwischen den Sensoren 60 besteht in einer oder mehreren Eigenschaften bezüglich ihres Materials oder ihrer Geometrie, insbesondere z.B. auch darin, daß die Leiterbahnen 21a und 21b auf verschiedenen, in unmittelbarer Nähe zueinander angeordneten Substraten 12, 32, 52 aufgebracht sind, so daß die Sensoren unterschiedliche Absorptions- und Emissionseigenschaften haben und dadurch die Berechnung des Strahlungsfehlers möglich wird.

Durch eine Anordnung von jeweils zwei oder mehr Temperatursensoren, die sich jeweils paarweise in einem der oben beschriebenen Faktoren voneinander unterscheiden, ist eine hochpräzise Strahlungseichung in jeder Messung möglich. Insbesondere ist über eine Mustererkennung der Strahlungsfehler mit hoher Genauigkeit berechenbar. Aus einer Vielzahl von Meßwerten ist dann die von mehr als einem Parameter abhängige Temperatur bestimmbar.

**Patentansprüche**

1. Temperatursensor mit einer auf einem elektrisch isolierenden und eine geringe Strahlungsabsorption aufweisenden Substrat (12,32,52) dünnschichttechnisch in Mäanderform aufgebrachten elektrisch leitenden Schicht (21,34), deren beide Endpunkte (16,17) an eine Meßwerkschaltung anschließbar sind, **dadurch gekennzeichnet,** daß das Substrat (12,52) im optischen sichtbaren Wellenlängenbereich transparent ist, daß die elektrisch leitende Schicht (21,34) eine Vielzahl von mäanderförmigen Leiterbahnen (21) in einem Meßfenster (20) umfaßt, wobei die Gesamtoberfläche der Leiterbahnen (21) in der Projektion auf die Ebene des Substrates (12,52) zu der Oberfläche des Meßfensters (20) in einem Bedeckungsverhältnis von kleiner als 20 Prozent steht, und daß die Summe der Oberflächen des Meßfensters (20) und des das Meßfenster (20) umgebenden Meßfensterrahmens (22) zu der das Substrat (12,32) im Meßfensterbereich umrandenden Randoberfläche (23) in einem Flächenverhältnis von größer als 4 zu 1 steht.

2. Temperatursensor nach Anspruch 1, dadurch gekennzeichnet, daß das Substrat (12,52) Glas oder Quarz ist.

3. Temperatursensor nach Anspruch 1 oder 2, dadurch gekennzeichnet, daß das Flächenverhältnis größer als 10 zu 1 ist.

4. Temperatursensor mit einer auf einem elektrisch isolierenden und eine geringe Strahlungsabsorption aufweisenden Substrat (12,32,52) dünnschichttechnisch in Mäanderform aufgebrachten elektrisch leitenden Schicht (21,34), deren beide Endpunkte (16,17) an eine Meßwerkschaltung anschließbar sind, **dadurch gekennzeichnet,** daß die Schicht (21,34) eine Vielzahl von mäanderförmigen Leiterbahnen (21) in einem Meßfenster (20) umfaßt, wobei die Gesamtoberfläche der Leiterbahnen (21) in der Projektion auf die Ebene des Substrates (32,52) zu der Oberfläche des Meßfensters (20) in einem Bedeckungsverhältnis von kleiner als 20 Prozent steht, daß das Substrat (32,52) unter den Leiterbahnen (21) im Meßfenster (20) im wesentlichen weggeätzt (36) ist.

5. Temperatursensor nach Anspruch 4, dadurch gekennzeichnet, daß die Querschnittsfläche der auf dem Substrat (32,52) aufliegenden Umkehrschleifen (34) der Leiterbahnen (21) größer als die Querschnittsfläche der Leiterbahnen (21) ist.

6. Temperatursensor nach Anspruch 5, dadurch gekennzeichnet, daß die Querschnittsfläche der auf dem Substrat (32,52) aufliegenden Umkehrschleifen (34) der Leiterbahnen (21) 5 bis 15 mal größer als die Querschnittsfläche der Leiterbahnen (21) ist.

7. Temperatursensor nach einem der Ansprüche 4 bis 6, dadurch gekennzeichnet, daß die auf dem Substrat (32,52) aufliegenden Umkehrschleifen (34) der Leiterbahnen (21) aus widerstandsneutralem Material bestehen.

8. Temperatursensor nach Anspruch 7, dadurch gekennzeichnet, daß das widerstandsneutrale Material Konstantan ist.

9. Temperatursensor nach Anspruch 8, dadurch gekennzeichnet, daß das widerstandsneutrale Material Ni/Cr-80/20 ist.

10. Temperatursensor nach einem der Ansprüche 4 bis 9, dadurch gekennzeichnet, daß das Substrat (32,52) aus Silizium hergestellt ist.

11. Temperatursensor nach Anspruch 10, dadurch gekennzeichnet, daß das Substrat (32,52) im Rahmenbereich beidseitig verspiegelt ist, wobei die Leiterbahnen (21) und die Umkehrschleifen (34) mit einer Zwischenschicht gegen die spiegelnde Schicht isoliert sind.

12. Temperatursensor nach einem der Ansprüche 4 bis 9, dadurch gekennzeichnet, daß das Substrat (32,52) im optischen sichtbaren Wellenlängenbereich transparent ist.

13. Temperatursensor nach Anspruch 12, dadurch gekennzeichnet, daß das Substrat (32,52) aus strukturierbarem Glas hergestellt ist.

14. Temperatursensor nach einem der Ansprüche 1 bis 13, dadurch gekennzeichnet, daß das Substrat (32,52) eine Dicke zwischen 200 und 500 Mikrometer aufweist.

15. Temperatursensor nach einem der Ansprüche 1 bis 14, dadurch gekennzeichnet, daß die Leiterbahnen (21) eine Dicke von 0,5 bis 1 Mikrometer aufweisen.

16. Temperatursensor nach einem der Ansprüche 1 bis 15, dadurch gekennzeichnet, daß die Leiterbahnen (21) eine Breite von kleiner als 30 Mikrometer aufweisen.

17. Temperatursensor nach einem der Ansprüche 1 bis 16, dadurch gekennzeichnet, daß die Leiterbahnen (21) aus einem Werkstoff hoher Reflektivität im optisch sichtbaren Wellenlängenbereich hergestellt oder mit einem solchen Werkstoff beschichtet sind.

18. Temperatursensor nach Anspruch 17, dadurch gekennzeichnet, daß die Leiterbahnen (21) aus einer Schichtenfolge aus Chrom-Nickel-Chrom (54,55,54) bestehen.

19. Temperatursensor nach Anspruch 17, dadurch gekennzeichnet, daß die Leiterbahnen (21) aus Platin bestehen.

20. Temperatursensor nach einem der Ansprüche 1 bis 16, dadurch gekennzeichnet, daß die Leiterbahnen (21) aus einem Werkstoff hoher Transparenz im optisch sichtbaren Wellenlängenbereich sind.

21. Temperatursensor nach Anspruch 20, dadurch gekennzeichnet, daß die Leiterbahnen (21) aus Indium-Zinn-Oxid (ITO), Antimon-Zinn-Oxid (SbTO) oder einer atomar dünnen passivierten Goldschicht bestehen.

22. Temperatursensor nach einem der Ansprüche 1 bis 21, dadurch gekennzeichnet, daß das Bedeckungsverhältnis kleiner als 10 Prozent ist.

23. Temperatursensor nach einem der Ansprüche 1 bis 22, dadurch gekennzeichnet, daß die Meßwerkschaltung zwei dünnschichttechnisch auf das Substrat (12,32,52) aufgebrachte erste Spannungsanschlußbahnen (19) aufweist, die jeweils von einem in großer Entfernung von dem Meßfenster (20) angeordneten Anschlußpunkt (15) zu dem zugehörigen Endpunkt (16,17) im Meßfenster (20) verlaufen.

24. Temperatursensor nach Anspruch 23, dadurch gekennzeichnet, daß die Meßwerkschaltung zwei dünnschichttechnisch auf das Substrat (12,32,52) aufgebrachte zweite Anschlußbahnen (18) zur Stromeinprägung aufweist, die jeweils von einem in großer Entfernung von dem Meßfenster (20) angeordneten Anschlußpunkt (14) zu dem zugehörigen Endpunkt (16,17) im Meßfenster (20) verlaufen.

25. Temperatursensor nach einem der Ansprüche 1 bis 24, dadurch gekennzeichnet, daß mindestens zwei voneinander unabhängige mäanderförmige Schichten (21a,21b) auf einem Substrat (12,32,52) vorgesehen sind, die sich in mindestens einem ihrer geometrischen Merkmale voneinander unterscheiden, so daß sie unterschiedliche Absorptions- und Emissionseigenschaften aufweisen.

26. Temperatursensor nach einem der Ansprüche 1 bis 25, dadurch gekennzeichnet, daß zwei voneinander unabhängige mäanderförmige Schichten (21a,21b) vorgesehen sind, die sich in ihrem Werkstoff, in der Verspiegelung, in dem Bedeckungsverhältnis oder in der Querschnittsfläche der Leiterbahnen (21) voneinander unterscheiden.

Fig.1

Fig. 2

Fig.3

Fig.4

Fig 5

Fig.6